## Europäisches Patentamt
## European Patent Office
## Office européen des brevets

(19)

(11) Veröffentlichungsnummer: **0 042 908**
**B1**

(12) # EUROPÄISCHE PATENTSCHRIFT

(45) Veröffentlichungstag der Patentschrift:
13.08.86

(51) Int. Cl.⁴: **B 60 K 5/12,** F 16 F 9/10,
F 16 F 15/04

(21) Anmeldenummer: 81101896.9

(22) Anmeldetag: 14.03.81

(54) **Motorlager für Lastkraftwagen, Omnibusse oder dergleichen Nutzfahrzeuge.**

(30) Priorität: 27.06.80 DE 3024090

(43) Veröffentlichungstag der Anmeldung:
06.01.82 Patentblatt 82/1

(45) Bekanntmachung des Hinweises auf die Patenterteilung:
13.08.86 Patentblatt 86/33

(84) Benannte Vertragsstaaten:
BE FR GB IT NL SE

(56) Entgegenhaltungen:
EP-A-0 006 819
EP-A-0 014 742
DE-A-1 931 940
DE-A-2 139 875
DE-A-2 307 567
DE-A-2 406 956
DE-A-2 648 526
DE-A-2 717 825
DE-A-2 727 244
DE-A-2 802 896
DE-A-2 932 131
DE-A-2 937 052
US-A-2 380 899

(73) Patentinhaber: Boge GmbH, Bogestrasse 50, D-5208
Eitorf/Sieg (DE)

(72) Erfinder: Brenner, Heinz, Ing.grad., Am Thurmberg
11, D-5483 Bad Neuenahr- Ahrweiler (DE)

## Beschreibung

Die Erfindung bezieht sich auf ein Motorlager für Lastkraftwagen, Omnibusse oder dergleichen Nutzfahrzeuge mit jeweils einem an dem Fahrzeugrahmen und dem Motor anschließbaren Befestigungsteil, wobei die Befestigungsteile über eine Elastomerfeder miteinander verbunden sind, und mit einer hydraulischen Dämpfungsvorrichtung, wobei die Elastomerfeder zusammen mit einem Grundkörper und einem tellerartigen Faltenbalg einen Raum begrenzt, der durch eine elastische Trennwand mit einer Drosselöffnung in eine dem Grundkörper zugewandte mit Dämpfungsflüssigkeit gefüllte Kammer und in einen einen Teil der Dämpfungsflüssigkeit drucklos aufnehmenden Ausgleichsraum unterteilt ist. Ein solches Lager ist beispielsweise in der DE-A-27 27 244 (Figur 5 oder 13) beschrieben und dargestellt.

Es sind hydraulisch dämpfende Lager bekannt (z.B. DE-A 28 02 896, DE-A 27 27 244, EP-A 6 819). bei denen das mit dem Fahrzeugrahmen zu verbindende Befestigungsteil in Abhängigkeit vom zur Verfügung stehenden Einbauraum entweder topf- oder U-förmig ausgebildet ist, während das an den Motor anzuschließende Befestigungsteil die Form eines Kegels oder eines Keiles aufweist. Zwischen diesen beiden Befestigungsteilen sind entweder eine umlaufende, ringförmige Schubfeder oder mindestens zwei blockierartige Schubfedern aus Gummi einvulkanisiert. Bei einem solchen Motorlager werden sowohl die hochfrequenten Schwingungen mit kleinen Amplituden, die vom normal laufenden Motor erzeugt werden, als auch die niederfrequenten Schwingungen mit Schwingungen mit großen Amplituden die beim Anlassen des Motors, bei untertourigem Motorlauf oder durch Anregung von der Fahrbahn entstehen, vom Motorbefestigungsteil in die Schubfedern eingeleitet. Diese Lager sind jedoch lediglich für Personenkraftwagen geeignet.

Um die auftretenden Schwingungen zu dämpfen, ist es zwar bekannt, zwischen dem Motor und dem Fahrzeugrahmen bei Lastkraftwagen zusätzlich einen hydraulischen Stoßdämpfer anzuordnen. Dieser dämpft in unerwünschter Weise zwar die niederfrequenten Schwingungen mit großen Amplituden, aber daneben auch die hochfrequenten Schwingungen mit kleinen Amplituden. Abgesehen von dem zusätzlichen Aufwand für einen solchen Stoßdämpfer muß eine Montagemöglichkeit gegeben sein und eine besondere Montage erfolgen.

Zur elastischen Lagerung von Motoren in Personenkraftwagen (z.B. DE-A 28 02 896. DE-A 27 27 244) sind darüber hinaus Motorlager bekannt, bei denen zwischen den beiden Befestigungsteilen des Lagers zusätzlich zur Schubfeder eine Dämpfungsvorrichtung angeordnet ist, durch die die niederfrequenten Schwingungen mit großen Amplituden stark gedämpft werden. Derartig ausgebildete Motorlager nun bei Lastkraftwagen, Omnibussen oder dergleichen Nutzfahrzeugen einzusetzen, wäre zwar grundsätzlich möglich. Infolge des sehr hohen Motorgewichtes ergeben sich jedoch so große Lagerlasten, daß dies zu einer nicht mehr akzeptablen, insbesondere aber baulich nicht mehr unterbringbaren Lagergröße führen würde. Die aufzunehmenden Lagerlasten würden einen derart großen Außendurchmesser verlangen, der im zur Verfügung stehenden, engen Einbauraum von Nutzfahrzeugen oder dergleichen nicht unterzubringen ist.

Der Erfindung liegt deshalb die Aufgabe zugrunde, ein Motorlager zur elastischen hydraulischen gedämpften Abstützung von Motoren, das bisher nur in Personenkraftwagen oder dergleichen verwendet wurde, so auszubilden, daß es auch in Lastkraftwagen, Omnibussen oder dergleichen Nutzfahrzeugen eingesetzt werden kann.

Zur Lösung dieser Aufgabe wird bei einem Motorlager der eingangs beschriebenen Gattung vorgeschlagen. daß die Elastomerfeder in eine Äußere, ein- oder mehrteilige Schubfeder und in eine innere, sich über den Grundkörper am Fahrzeugrahmenbefestigungsteil abstützende, ringförmige Gummifeder aufgeteilt ist.

Durch diese Ausbildung wird von der inneren, ringförmigen Gummifeder nur ein geringer Anteil der Lagerlast aufgenommen und dennoch eine wirkungsvolle Dämpfung der niederfrequenten Schwingungen erreicht. Diese geringe Lagerlast ermöglicht es, die Dämpfungsvorrichtung Ähnlich wie bei Personenkraftwagen, sehr klein auszubilden und innerhalb des Motorlagers anzuordnen, ohne daß sich dadurch die Baugröße des Motorlagers verändert. Die Dämpfungsvorrichtung ist unter Verwendung der beiden Befestigungsteile des Motorlagers, also ohne großen zusätzlichen Aufwand herzustellen. Die Äußere, ein- oder mehrteilige Schubfeder läßt sich daher den Einbauverhältnissen entsprechend anpassen.

Gemäß einer bevorzugten Ausführungsform der Erfindung ist die Trennwand membranartig ausgebildet und weist zumindest einen Teilbereich mit einer geringen, mit zunehmender Verformung ebenfalls zunehmender Eigensteifigkeit auf. Damit wird die erforderliche Federungscharakteristik der Trennwand erzielt und es werden besonders gute Dämpfungseigenschaften im Bereich niederfrequenter Schwingungen mit großen Amplituden und eine geringe Steifigkeit im Bereich hochfrequenter Schwingungen mit kleinen Amplituden erreicht. Zumindest eines der Befestigungsteile ist an seinen an das andere Befestigungsteil angrenzenden Flächen mit einer elastischen Schicht, beispielsweise aus Gummi, versehen. Diese Schicht bildet bei niederfrequenten Schwingungen mit besonders großen Amplituden einen weichen Anschlag und verhindert somit das Entstehen von Geräuschen.

Zur Verringerung des Herstellungs-, insbesondere des Vulkanisationsaufwandes liegt die fest mit dem Motorbefestigungsteil verbundene Schubfeder unter Vorspannung an einer geneigten Fläche des Fahrzeugbefestigungsteiles an, wobei an der Schubfeder angebrachte als Armierung dienende Bleche das Einsetzen der Schubfedern erleichtern. Um bei Entlastung des Motorlagers einen Teil dieser Vorspannung zu erhalten, ist ein Befestigungteil mit einem in eine Ausnehmung des anderen Befestigungsteiles ragenden elastischen, vorzugsweise einstellbaren, Anschlag versehen. Die Elastizität dieses Anschlages kann durch eine Gummibeschichtung des Anschlages oder der Ausnehmung erreicht werden.

Weitere Einzelheiten, Merkmale und Vorteile des Gegenstandes der Erfindung werden nachfolgend anhand eines in der Zeichnung dargestellten Ausführungsbeispieles näher erläutert.

Fig. 1 eine Aufrißdarstellung eines teilweise geschnittenen Motorlagers gemäß der Erfindung und

Fig. 2 eine teilweise geschnittene Seitenansicht des Motorlagers nach Fig. 1.

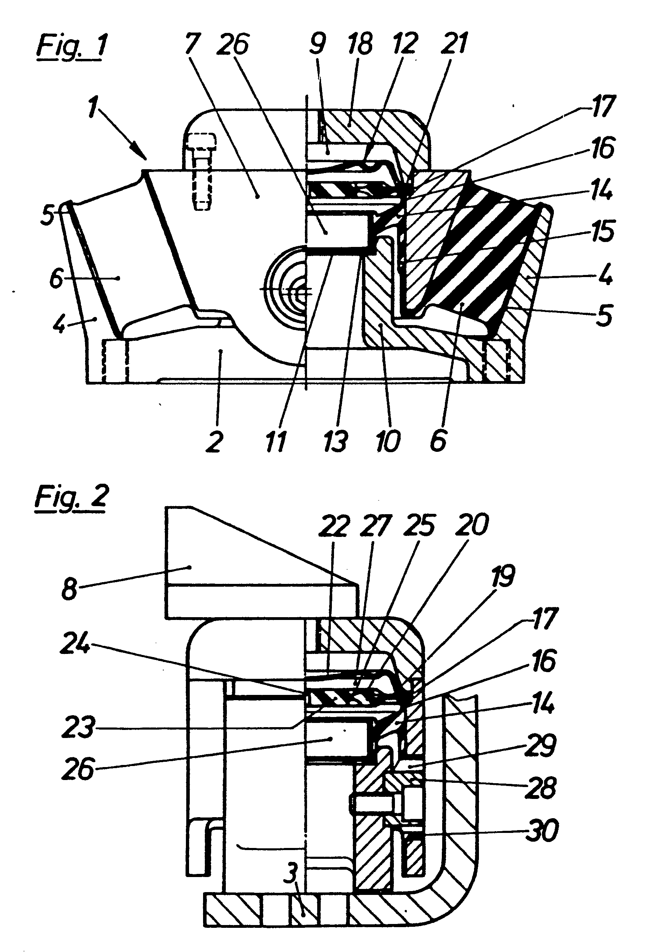

Das in der Zeichnung gezeigte Motorlager 1 für den Motor eines Lastkraftwagens besteht aus einem U-förmigen Unterteil 2, das auf einem nur angedeuteten Rahmenteil 3 (Fig. 2) in an sich bekannter Weise befestigt ist und dessen beide Schenkel 4 nach außen geneigt sind. Über zwei blockartige, an ihren Auflageflächen mit einem Blech 5 versehene Schubfedern 6 stützt sich ein keilförmiges Oberteil 7 an den beiden Schenkeln 4 des Unterteiles 2 ab. Die die anvulkanisierten Schubfedern 6 aufnehmenden seitlichen Anschlußflächen des Oberteiles 7 weisen eine mit den Schenkeln 4 übereinstimmende Neigung auf. Das Oberteil 7 trägt, wie in Fig. 2 angedeutet, einen Flansch 8 eines nicht weiter dargestellten Motors und besitzt einen freien Innenraum 9.

In den unteren Bereich dieses Innenraumes 9 ragt ein einstückig mit dem Unterteil 2 gefertigter Kragen 10, der an seinem freien Ende einen topfartig geformten Grundkörper 11 aus Blech einer nachfolgend näher beschriebenen Federungs- und Dämpfungsvorrichtung 12 führend aufnimmt. In diesem Führungs- und Aufnahmebereich ist der Grundkörper 11 mit einer dünnen Gummischicht 13 versehen, die gleichzeitig mit einer ringförmigen Gummifeder 14 anvulkanisiert wurde. Über diese Gummifeder 14 ist der Grundkörper 11 und damit aber zusätzlich auch das Unterteil 2 mit dem Oberteil 7 verbunden, wobei die Gummifeder 14 auch durch Vulkanisation an das Oberteil 7 angeschlossen ist.

Von der Gummifeder 14 erstreckt sich am Oberteil 7 einerseits eine dünne, abgestufte Gummischicht 15 bis in den Bereich des Kragens 10 - die Gummischicht 15 bildet hier einen elastischen Anschlag für den Kragen 10 - und weiter bis zu den Schubfedern 6. Andererseits führt eine dünne Gummischicht 16 bis in eine kreisförmige Ausnehmung 17 des Oberteiles 7, in die ein das Oberteil 7 abschließender Deckel 18 eingesetzt und in an sich bekannter Weise mittels Schrauben gesichert ist. In die Ausnehmung 17 ist der Blechring 19 einer Membran 20 eingespannt, der in diesem Ausführungsbeispiel im Einspannbereich von einem U-förmigen Rand 21 eines tellerartigen Faltenbalges 22 umschlossen ist. Der Deckel 18 schützt hier den Faltenbalg 22 vor Beschädigungen.

Die Membran 20 besitzt ein mit dem Blechring 19 vulkanisierten Gummiteil 23, das in diesem Beispiel mit einer zentrischen, als Drossel wirkenden Öffnung 24 ausgestattet und nahe dem Blechring 19 beidseitig mit einer ringförmigen Einschnürung 25 versehen ist. Über die Drosselöffnung 24 steht die von dem Grundkörper 11, der Gummifeder 14, der Gummischicht 16 und der Membran 20 begrenzte und mit Dämpfungsflüssigkeit gefüllte Kammer 26 mit einem Ausgleichsraum 27 in Strömungsverbindung, der von der Membran 20 und dem Faltenbalg 22 umschlossen ist. Dieser Ausgleichsraum 27 kann infolge der Formgebung des Faltenbalges 22 einen Teil der Dämpfungsflüssigkeit der Kammer 26 nahezu drucklos aufnehmen.

Durch die mit den Einschnürungen 25 verbundene Querschnittsverringerung des Gummiteiles 23 bzw. der Membran 20 wird erreicht, daß sich dieser Querschnitt bei hochfrequenten Schwingungen mit kleiner Amplitude verhältnismäßig stark verformt, so daß diese Schwingungen nicht oder nur wenig gedämpft werden. Bei Schwingungen mit niedriger Frequenz und großer Amplitude erfolgt kaum eine weitere Verformung des Gummiteiles 23 bzw. der Membran 20, so daß hierbei Dämpfungsflüssigkeit aus der Kammer 26 über die Drosselöffnung 24 in den Ausgleichsraum 27 strömt, was eine verhältnismäßig starke Dämpfung dieser Schwingungen zur Folge hat. Der Deckel 18 des Oberteiles 7 ist mit einer nicht gezeichneten Be- und Entlüftungsöffnung versehen. Dies stellt sicher, daß sich bei einer Vergrößerung des Ausgleichsraumes im Raum unter dem Deckel 18 kein Druck aufbauen kann.

Wie bereits weiter oben erwähnt, sind die Schubfedern 6 nicht fest mit den Schenkeln 4 des Unterteiles 2 verbunden. Diese Schubfedern 6 werden unter Vorspannung mit dem Oberteil 7 und der Federungsund Dämpfungsvorrichtung 12 in das Unterteil 2 eingeschoben, wobei die Bleche 5 diesen Einschiebevorgang erleichtern. Um bei Entlastung des Motorlagers einen Teil dieser Vorspannung zu erhalten, ist am Kragen 10 des Unterteiles 2 ein einstellbarer Anschlagstift 28 befestigt, der mit einer Ausnehmung 29 des Oberteiles 7 zusammenwirkt. Im sogenannten Anschlagbereich ist diese Ausnehmung 29 mit einer Gummischicht 30 belegt.

In Abänderung des erläuterten Ausführungsbeispieles ist es möglich, entweder die Federungs- oder Dämpfungsvorrichtung 12 umgekehrt im Motorlager 1 anzuordnen oder das gesamte Motorlager 1 um 180° zu drehen. Die Membran 20 kann jede beliebige Form oder Ausbildung besitzen, wobei jedoch sichergestellt sein sollte, daß dieselbe die erforderliche Federungscharakteristik besitzt.

Bezugszeichenliste

1 Motorlager
2 Unterteil
3 Rahmenteil
4 Schenkel
5 Blech
6 Schubfedern
7 Oberteil
8 Flansch
9 Innenraum
10 Kragen
11 Grundkörper
12 Federungs- und Dämpfungsvorrichtung
13 Gummischicht
14 Gummifeder
15 Gummischicht
16 Gummischicht
17 Ausnehmung
18 Deckel
19 Blechring
20 Membran
21 Rand
22 Faltenbalg
23 Gummiteil
24 Öffnung
25 Einschnürung
26 Kammer
27 Ausgleichsraum
28 Anschlagstift
29 Ausnehmung

**Patentansprüche**

1. Motorlager für Lastkraftwagen, Omnibusse oder dergleichen Nutzfahrzeuge, mit jeweils einem an dem Fahrzeugrahmen und dem Motor anschließbaren Befestigungsteil (2, 7), wobei die Befestigungsteile über eine Elastomerfeder (6, 14) miteinander verbunden sind und mit einer hydraulischen Dämpfungsvorrichtung (12), wobei die Elastomerfeder zusammen mit einem Grundkörper (11) und einem tellerartigen Faltenbalg (22) einen Raum (26, 27) begrenzt, der durch eine elastische Trennwand (20) mit einer Drosselöffnung (24) in eine dem Grundkörper (11) zugewandte, mit Dämpfungsflüssigkeit gefüllte Kammer (26) und in einen einen Teil der Dämpfungsflüssigkeit drucklos aufnehmenden Ausgleichsraum (27) unterteilt ist,

dadurch gekennzeichnet,

daß die Elastomerfeder (6, 14) in eine Äußere, ein- oder mehrteilige Schubfeder (6) und in eine innere, sich über den Grundkörper (11) am Fahrzeugrahmen-Befestigungsteil (2) abstützende. mit der Trennwand (20) und dem Grundkörper (11) die mit Dämpfflüssigkeit gefüllte Kammer (26) bildende ringförmige Gummifeder (14) aufgeteilt ist.

2. Motorlager nach Anspruch 1.

dadurch gekennzeichnet.

daß die Trennwand (20) membranartig ist und zumindest einen Teilbereich (25) mit einer geringen, mit zunehmender Verformung ebenfalls zunehmender Eigensteifigkeit aufweist.

3. Motorlager nach einem der Ansprüche 1 oder 2,

dadurch gekennzeichnet,

daß zumindest eines der Befestigungsteile (7) an seinen an das andere Befestigungsteil (2) angrenzenden Flächen mit einer elastischen Schicht (13, 15, 16) versehen ist.

4. Motorlager nach mindestens einem der Ansprüche 1 bis 3,

dadurch gekennzeichnet,

daß die fest mit dem Motorbefestigungsteil (7) verbundene Schubfeder (6) unter Vorspannung an einer geneigten Fläche des Fahrzeugbefestigungsteiles (2, 4) anliegt.

5. Motorlager nach Anspruch 4,

dadurch gekennzeichnet,

daß ein Befestigungsteil (2, 10) mit einem in eine Ausnehmung (29) des anderen Befestigungsteiles (7) ragenden elastischen Anschlag (28, 30) versehen ist.

6. Motorlager nach Anspruch 4,

dadurch gekennzeichnet,

daß die dem Fahrzeugbefestigungsteil (2) zugewandte Stützfläche der Schubfeder (6) mit einer Armierung (5) vorgesehen ist.

**Claims**

1. Engine mounting for trucks, omnibuses or like load-carrying vehicles, with respective attachment parts (2, 7) for attaching to the vehicle frame and to the engine, the attachment parts being connected together by an elastomeric spring (6, 14) and having a hydraulic damping device (12), the elastomeric spring together with a base member (11) and a plate-shaped bellows (22) defining a chamber (26, 27) which is divided by an elastic separating wall (20) with a throttled orifice (24) into a chamber (26) which faces towards the base member (11) and is filled with damping fluid, and an unpressurised compensating chamber (27) which receives part of the damping fluid at zero pressure, characterised in that, the elastomeric spring (6, 14) is divided into an outer shear spring (6) in one or more parts and an inner annular rubber spring (14) engaging the vehicle-framework-attachement component (2) through the base member (11), forming with the separating wall (20) and the base member (11) the chamber (26) which is filled with damping fluid.

2. Engine mounting according to claim 1, characterised in that, the separating wall (20) is in the form of a diaphragm or membrane and has at least one partial region (25) with a low inherent stiffness which increases with increasing deformation.

3. Engine mounting according to one of claims 1 or 2, characterised in that, at least one of the attachment components (7) is provided with an elastic coating (13, 15, 16) on those of its surfaces which adjoin the other attachment component (2).

4. Engine mounting according to at least one of claims 1 to 3, characterised in that, the shear spring (6) which is bonded to the engine attachment component (7) engages an inclined surface of the vehicle attachment component (2, 4) with pre-loading.

5. Engine mounting according to claim 4, characterised in that, one attachment component (2, 10) is provided with an elastic stop (28, 30) projecting into a recess (29) in the other attachment component (7).

6. Engine mounting according to claim 4, characterised in that, that abutment surface of the shear spring (6) which is towards the vehicle attachment component (2) is provided with reinforcement (5).

## Revendications

1. Support de moteur pour camions, autobus, ou véhicules utilitaires semblables, comportant respectivement une pièce de fixation (2, 7) que l'on peut relier au châssis du véhicule et au moteur, étant precisé que les pièces de fixation sont reliées l'une à l'autre par l'intermédiaire d'un ressort élastomère (6, 14), et comportant un dispositif d'amortissement hydraulique (12), étant précisé que le ressort élastomère, en collaboration avec un élément de base (11) et un soufflet en forme d'assiette (22) limite un volume (26, 27) qu'une paroi élastique de séparation (20) présentant une ouverture d'étranglement (24) divise en une chambre (26), côté élément de base (11), remplie de liquide d'amortissement et en un volume d'équilibrage (27) qui reçoit sans pression une partie du liquide d'amortissement, caractérisé en ce que, le ressort élastomère (6, 14) se partage en un ressort extérieur (6), en une ou plusieurs parties, travaillant en cisaillement et en un ressort de caoutchouc (14), de forme annulaire, intérieur, s'appuyant, par l'intermédiaire de l'élément de base (11), contre la pièce de fixation (2) au châssis du véhicule, formant avec la paroi de séparation (20) et l'élément de base (11) la chambre (26) remplie du liquide d'amortissement.

2. Support selon la revendication 1, caractérisé en ce que, la paroi de séparation (20) est du type membrane et comporte au moins une zone partielle (25) présentant une faible rigidité propre qui croît également avec une déformation croissante.

3. Support de moteur selon l'une des revendications 1 ou 2, caractérisé en ce que, au moins l'une des pièces de fixation (7) est munie, sur ses surfaces qui jouxtent l'autre pièce de fixation (2), d'une couche élastique (13, 15,16).

4. Support de moteur selon au moins l'une des revendications 1 à 3, caractérisé en ce que, le ressort (6) travaillant en cisaillement est solidarisé avec la pièce de fixation au moteur (7) s'appuie, sous précontrainte, contre une surface inclinée de la pièce de fixation au véhicule (2, 4).

5. Support de moteur selon la revendication 4, caractérisé en ce que, une pièce de fixation (2, 10) comporte une butée élastique (28, 30) qui pénètre dans un évidement (29) de l'autre pièce de fixation (7).

6. Support selon la revendication 4, caractérisé en ce que, la surface d'appui, côté pièce de fixation au véhicule (2), du ressort travaillant en cisaillement (6) comporte une monture (5).

Fig. 1

Fig. 2